# EUROPEAN PATENT APPLICATION

(11) **EP 3 779 694 A1**
(43) Date of publication of application: **17.02.2021**
(21) Application number: 20161918.6
(22) Date of filing: 09.03.2020
(51) Int. Cl.: G06F 9/50, G06F 9/455

(54) **METHOD AND APPARATUS FOR RESOURCE MANAGEMENT, ELECTRONIC DEVICE, AND STORAGE MEDIUM**

(30) Priority: 12.08.2019 CN 201910741694
(71) Applicant: BEIJING BAIDU NETCOM SCIENCE AND TECHNOLOGY CO. LTD., 100085 Beijing (CN)
(72) Inventor: Leng, Xianglun, Beijing, 100085 (CN); ZHAO, Zhibiao, Beijing, 100085 (CN); Han, Jinchen, Beijing, 100085 (CN); Ouyang, Jian, Beijing, 100085 (CN); Qi, Wei, Beijing, 100085 (CN); Wang, Yong, Beijing, 100085 (CN)
(74) Representative: Witte, Weller & Partner Patentanwälte mbB

(57) **Abstract**

Embodiments of the present disclosure provide a method and apparatus for resource management, an electronic device, and a computer-readable storage medium. The method includes: determining a plurality of virtual functions to be supported, where each of the plurality of virtual functions corresponds to a virtual machine running on a computing device. The method further includes: dividing a physical resource set into a plurality of physical resource subsets according to a predetermined ratio, a number of the physical resource subsets being identical to a number of the virtual functions. The method further includes: allocating the plurality of physical resource subsets to the plurality of virtual functions respectively. Embodiments of the present disclosure can virtualize physical resources in a space division multiplexing manner with low hardware and software overhead, and can improve the security and reliability of a system.

## Description

### TECHNICAL FIELD

Embodiments of the present disclosure generally relate to the field of computer technology, and more specifically to a method and apparatus for resource management, an electronic device, and a computer-readable storage medium.

### BACKGROUND

With the rapid development of cloud computing, modern data centers often use virtualization technology to improve the utilization of physical resources of servers. The software and hardware of a virtual machine are separated for better software management, fault detection, system maintenance, and the like. With the virtualization technology, a plurality of virtual servers can run in one physical server, thereby improving the utilization of the physical server and greatly reducing the deployment cost of the cloud computing.

Artificial intelligence (AI) computing has been widely applied in the cloud computing, and various graphics processing units (GPUs) or AI acceleration cards have also been deployed in large numbers. With single-root input/output (I/O) virtualization (SR-IOV) technology, these accelerator cards can quickly support virtualization. However, there are still many problems that need to be solved in the conventional scheme of supporting virtual machines using the accelerator cards.

### SUMMARY

Embodiments of the present disclosure relate to a method and apparatus for resource management, an electronic device, and a computer-readable storage medium.

In a first aspect, an embodiment of the present disclosure provides a method for resource management. The method includes: determining a plurality of virtual functions to be supported, each of the plurality of virtual functions corresponding to a virtual machine running on a computing device. The method further includes: dividing a physical resource set into a plurality of physical resource subsets according to a predetermined ratio, a number of the physical resource subsets being identical to a number of the virtual functions. The method further includes: allocating the plurality of physical resource subsets to the plurality of virtual functions respectively.

In a second aspect, an embodiment of the present disclosure provides an apparatus for resource management. The apparatus includes: a virtual function determining module, configured to determine a plurality of virtual functions to be supported, each of the plurality of virtual functions corresponding to a virtual machine running on a computing device. The apparatus further includes: a resource set dividing module, configured to divide a physical resource set into a plurality of physical resource subsets according to a predetermined ratio, a number of the physical resource subsets being identical to a number of the virtual functions. The apparatus further includes: a resource subset allocating module, configured to allocate the plurality of physical resource subsets to the plurality of virtual functions respectively.

In a third aspect, an embodiment of the present disclosure provides an electronic device. The electronic device includes: one or more processors; and a storage apparatus. The storage apparatus is configured to store one or more programs. The one or more programs, when executed by the one or more processors, cause the one or more processors to implement the method according to the first aspect.

In a fourth aspect, an embodiment of the present disclosure provides a computer readable storage medium, storing a computer program thereon, where the computer program, when executed by a processor, implements the method according to the first aspect.

It should be appreciated that the description of the Summary is not intended to limit the key or important features of embodiments of the present disclosure, or to limit the scope of the present disclosure. Other features of the present disclosure will become readily comprehensible through the following description.

### BRIEF DESCRIPTION OF THE DRAWINGS

The above and other objectives, features, and advantages of some embodiments of the present disclosure will become readily comprehensible by reading the following detailed description with reference to the accompanying drawings. In the drawings, several embodiments of the present disclosure are illustrated by way of examples but not limitations.
Fig. 1 shows a schematic diagram of an example environment in which some embodiments of the present disclosure may be implemented;
Fig. 2 shows a schematic flowchart of a method for resource management according to an embodiment of the present disclosure;
Fig. 3 shows a schematic flowchart of an example process of division and allocation on a physical resource set according to an embodiment of the present disclosure;
Fig. 4 shows a schematic block diagram of a register for managing an address range according to an embodiment of the present disclosure;
Fig. 5 shows a schematic block diagram of an apparatus for resource management according to an embodiment of the present disclosure; and
Fig. 6 shows a schematic block diagram of a device that can be used to implement some embodiments of the present disclosure.

The same or similar reference numerals are used throughout the drawings to indicate the same or similar components.

### DETAILED DESCRIPTION OF EMBODIMENTS

The principle and spirit of the present disclosure will be described below with reference to several exemplary embodiments shown in the drawings. It should be understood that these specific embodiments are described only to enable those skilled in the art to better understand and implement the present disclosure, but not to limit the scope of the present disclosure in any way.

As mentioned above, AI computing has been widely applied in the cloud computing, and various GPUs or AI acceleration cards have also been deployed in large numbers. However, the conventional schemes generally virtualize physical resources by using a time division multiplexing strategy. For example, for computing resources, the GPUs or AI acceleration cards generally schedule computing resources to virtual machines by using a time slice-based scheduling strategy. Generally, each time slice scheduled to a virtual machine may be set to 6 milliseconds. Once the time slice scheduled for this virtual machine is used up, the use of computing resources is switched to next virtual machine. Within each time slice, the currently running virtual machine can occupy all computing resources (also referred to as computing power herein) . However, this time division scheduling strategy has a large overhead. For example, general GPU context switching takes hundreds of microseconds, such as 0.2 to 0.5 milliseconds, which means 3.33% to 8.33% overhead compared to a time slice of 6 milliseconds.

Moreover, in the conventional schemes, the data interaction between the GPU and the host substantially needs a direct memory access (DMA) unit. During virtualization, the direct memory access unit is also time division multiplexed between the virtual machines . This results in very high software overhead and complexity. First, in order to achieve secure isolation between the virtual machines, an operation command of the direct memory access unit needs to be forwarded through a virtual machine manager (VMM) or a hypervisor, thereby reducing system performance. When the operation of entering or exiting a virtual machine (VM_Entry or VM_Exit) is performed, large software overhead is incurred. Second, in order to reduce the entry or exit operation on the virtual machine, the system software needs to ensure system performance by complex technical means, such as virtual-shadow technology. In this way, the generated multi-command queue and complex command loop further increase the complexity of the system software.

In view of the above problems and other potential problems in the conventional schemes, some embodiments of the present disclosure propose a method and apparatus for resource management, an electronic device, and a computer-readable storage medium, which are intended to achieve secure and space division multiplexing virtualization of physical resources. The space division strategy here refers to allocating physical resources (for example, computing resources) to different virtual functions (or corresponding virtual machines) at a certain ratio, thereby avoiding various problems in the conventional time division multiplexing strategy.

On the other hand, in some embodiments of the present disclosure, the execution of each virtual machine is not affected by other virtual machines by implementing a hardware isolation mechanism between the virtual functions (or the corresponding virtual machines), so that the system is securer and more reliable. For example, some embodiments of the present disclosure may use a multi-channel direct memory access unit, and the channels may be isolated by hardware, for example, the hardware isolation is implemented by a virtual access control unit. In this way, the access command of each virtual machine can directly operate the direct memory access unit without being intercepted and forwarded by the virtual machine manager, and the complex software queue is also not required, which greatly reduces the software overhead of the system. Further, in some embodiments of the present disclosure, the virtual machine manager (or hypervisor) may be implemented simply. The system only needs to configure a corresponding control unit according to the number of virtual machines and the resource allocation situation during initialization, for example, set a register for recording resource allocation information accordingly.

In summary, embodiments of the present disclosure require fewer hardware resources, so the hardware cost is low. In addition, the software overhead is also low, and the complex scheduling and scheduling overhead in the time division strategy are avoided, so the implementation, maintenance and deployment are easy. Moreover, embodiments of the present disclosure implement hardware isolation between the virtual functions, thereby improving the security and reliability of the system. Furthermore, the driver of the virtual machine in embodiments of the present disclosure may be the same as that in the case where virtualization is not supported, and no modification is required. Hence, embodiments of the present disclosure can effectively solve various problems in the conventional physical resource virtualization schemes, thus better implement the virtualization of physical resources (such as AI acceleration cards), and are particularly suitable for cloud computing technology scenarios. Several embodiments of the present disclosure will be described below with reference to the drawings.

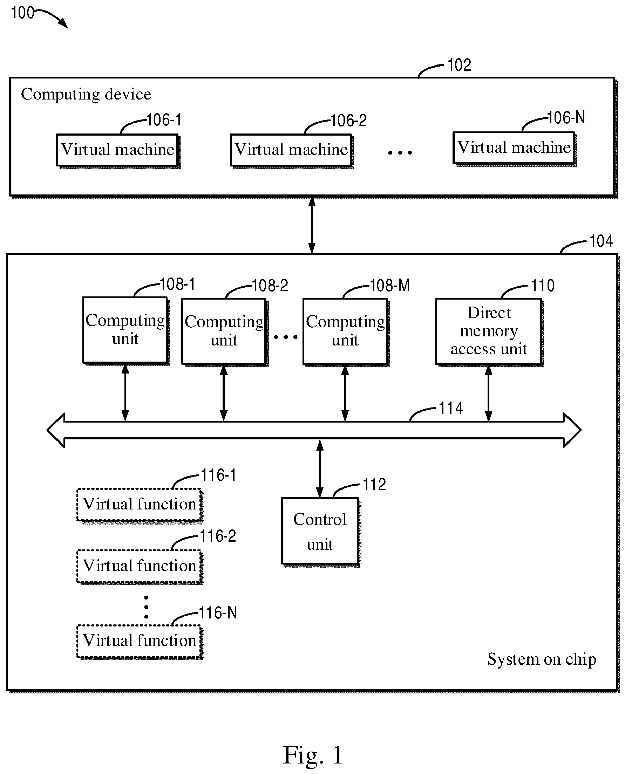

Fig. 1 shows a schematic diagram of an example environment 100 in which some embodiments of the present disclosure may be implemented. As shown in Fig. 1, the example environment 100 may include a computing device 102 and a system on chip (SoC) 104. The computing device 102 may be various types of computing devices capable of running virtual machines, for example, including but not limited to, a personal computer, a server computer, a hand-held or laptop device, a mobile device (such as a mobile phone, a personal digital assistant (PDA), or a media player), a multi-processor system, consumer electronics, a minicomputer, a mainframe computer, a distributed computing environment including any one of the systems or devices, and the like. In some embodiments, the computing device 102 may support a peripheral component interconnect express (PCIe) interface function to communicate and interconnect with the SoC 104. In addition, the computing device 102 may also support an I/O device through a single-root I/O virtualization (SR-IOV) function to improve the utilization of the I/O device.

As illustrated, a plurality of virtual machines 106-1, 106-2...106-N (hereinafter collectively referred to as virtual machines 106) may run on the computing device 102, where N represents a natural number, that is, any number of virtual machines 106 may run on the computing device 102. Generally, a virtual machine refers to an application execution environment created by a specific application program on a hardware platform of a physical machine, and a user can run the application through the environment and interact with the application as using the physical machine. When creating a virtual machine 106, the computing device 102 often needs to allocate a certain amount of physical resources from the computing device 102 hosting the virtual machine 106 through a manager for use by the virtual machine 106 in operation. The physical resources may be any available physical resources for running the virtual machine 106, including, but not limited to, computing resources (for example, CPU, GPU, FPGA, etc.), storage resources (for example, memories, storage disks, etc.), network resources (for example, network cards, etc.), and the like.

In the example environment 100, the SoC 104 is communicatively coupled with the computing device 102. Generally, the SoC refers to a complete system integrated on a single chip, specifically a system or product formed by combining a plurality of integrated circuits having specific functions on a single chip, including a complete hardware system and embedded software loaded thereto. For example, AI acceleration cards or various GPUs can be implemented by the SoC 104. However, it should be understood that, in addition to the AI acceleration cards and GPUs, the SoC 104 may implement any suitable system or function as needed.

In some embodiments, the SoC 104 may support single-root I/O virtualization, so that the SoC 104 looks like a plurality of independent physical devices. In other words, the SoC 104 may support physical functions (PFs) and virtual functions (VFs). For example, the physical functions may be full-featured PCIe functions that support single-root I/O virtualization. The physical functions may be discovered, managed and configured like common PCIe devices. In contrast, the virtual functions are lightweight PCIe functions that may be associated with the physical functions. For example, each virtual function may be separated from the physical functions and allocated to a virtual machine.

In the example of Fig. 1, for the N virtual machines 106 running on the computing device 102, the SoC 104 may support virtual functions 116-1, 116-2...116-N (hereinafter collectively referred to as virtual functions 116), where each of the virtual functions 116 may correspond to a virtual machine of the virtual machines 106. Although Fig. 1 shows that the virtual functions 116 correspond to the virtual machines 106 one to one, the corresponding relationship between the virtual functions 116 and the virtual machines 106 is not limited thereto. In other embodiments, there may be any appropriate corresponding relationship between the virtual machines 106 and the virtual functions 116.

The SoC 104 further includes various physical units for supporting the virtual functions 116, for example, computing units 108-1, 108-2...108-M (hereinafter collectively referred to as computing units 108, where M is a natural number) and a direct memory access unit 110. The computing units 108 can provide computing resources (or computing power), and thus can provide virtual computing power to the virtual functions 116. The direct memory access unit 110 can be used to provide access channel resources to memories, and thus can provide the virtual functions 116 with virtual access capability to the memories.

The SoC 104 further includes a control unit 112 for controlling various operations and functions thereof. The control unit 112 may be any device that implements a control function, including, but not limited to, a special-purpose computer, a general-purpose computer, a general-purpose processor, a microprocessor, a microcontroller, or a state machine. The control unit 112 may also be implemented as an individual computing device or a combination of computing devices, for example, a combination of a DSP and a microprocessor, a plurality of microprocessors, a combination of one or more microprocessors and a DSP core, or any other such configuration.

The SoC 104 further includes a communication link 114 for communicatively coupling the computing units 108, the direct memory access unit 110, and the control unit 112. The communication link 114 may be any form of connection or coupling that enables communication and interconnection between the components of the SoC 104, including, but not limited to, various types of buses. In some embodiments, the communication link 114 may include a network on chip (NoC).

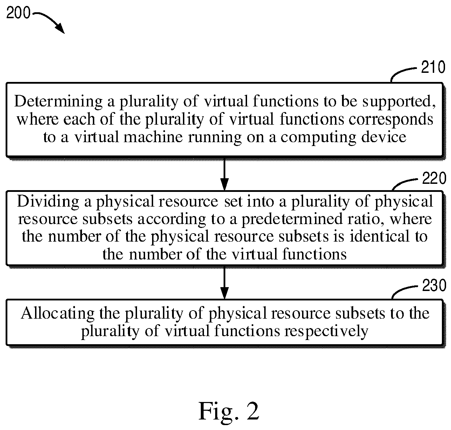

It should be understood that Fig. 1 only schematically shows the units, modules or components related to embodiments of the present disclosure in the example environment 100. In specific implementations, the example environment 100 may also include other units, modules, or components for other functions. In addition, although Fig. 1 shows specific numbers of various units, modules, or components, these specific numbers are exemplary only, and are not intended to limit the scope of the present disclosure in any way. In other embodiments, the example environment 100 may include any suitable numbers of various units, modules, or components. Therefore, embodiments of the present disclosure are not limited to the specific devices, chips, units, modules, or components shown in Fig. 1, but are generally applicable to any computing system environment that implements virtual machines and virtual functions. An example method for resource management according to an embodiment of the present disclosure will be described below with reference to Fig. 2.

Fig. 2 shows a schematic flowchart of a method 200 for resource management according to an embodiment of the present disclosure. In some embodiments, the method 200 may be performed on the SoC 104 communicatively coupled with the computing device 102. For example, the method 200 may be implemented by the control unit 112 of the SoC 104. In this case, the method 200 may be implemented by a processor or a processing unit of the control unit 112. In other embodiments, all or part of the method 200 may also be implemented by a computing device independent of the example environment 100, or by other units in the example environment 100. For ease of discussion, the method 200 will be described with reference to Fig. 1.

As described above, by virtualizing physical functions, the SoC 104 can provide the virtual functions 116 to the plurality of virtual machines 106 running on the computing device 102. Generally, one virtual machine (for example, the virtual machine 106-1) running on the computing device 102 may correspond to one virtual function (for example, the virtual function 116-1) of the SoC 104. However, in other embodiments, one virtual machine running on the computing device 102 may also correspond to a plurality of virtual functions of the SoC 104, or a plurality of virtual machines running on the computing device 102 may correspond to a virtual function of the SoC 104. In other words, in some embodiments of the present disclosure, the virtual machines 106 running on the computing device 102 and the virtual functions supported by the SoC 104 may have any reasonable corresponding relationship.

Therefore, in 210, in order to better provide the virtual functions to the virtual machines 106 running on the computing device 102, the control unit 112 of the SoC 104 first determines a plurality of virtual functions 116 to be supported by the SoC 104. Since each of the plurality of virtual functions 116 corresponds to a virtual machine 106 running on the computing device 102, the control unit 112 may determine the plurality of virtual functions 116 based on the corresponding relationship between the virtual machines 106 and the virtual functions 116. For example, in the example shown in Fig. 1, in the case where one virtual machine 106 corresponds to one virtual function, the control unit 112 may determine that the SoC 104 is to support N virtual functions 116 corresponding to the N virtual machines 106 respectively. Similarly, regardless of the corresponding relationship between the virtual machines 106 and the virtual functions 116, the control unit 112 can determine the plurality of virtual functions 116 to be supported by the SoC 104.

However, the control unit 112 is not limited to determining the plurality of virtual functions 116 by using the above method. In other embodiments, the control unit 112 may determine a reasonable number of virtual functions 116 according to the total quantity of physical resources of the SoC 104, and then map these virtual functions 116 to the virtual machines 106 running on the computing device 102. Alternatively, the control unit 112 may also receive an instruction from a user or administrator of the SoC 104 and determine the plurality of virtual functions 116 based on the instruction. That is, the plurality of virtual functions 116 to be supported by the SoC 104 may be configured by the user or administrator of the SoC 104. More generally, the control unit 112 may determine the plurality of virtual functions 116 to be supported by the SoC 104 by any suitable method.

In 220, the control unit 112 divides a physical resource set of the SoC 104 into a plurality of physical resource subsets according to a predetermined ratio, where the number of physical resource subsets is identical to the number of virtual functions 116. That is, in the case where the SoC 104 supports N virtual functions 116, the control unit 112 divides the physical resource set of the SoC 104 into N physical resource subsets based on the predetermined ratio.

Specifically, the control unit 112 may divide the physical resource set into N physical resource subsets according to characteristics of physical units providing the physical resource set. As an example, in some cases, the physical resource set of the SoC 104 is provided by a plurality of physical units. For example, in the example of Fig. 1, the computing resource set of the SoC 104 is provided by M computing units 108. In this case, the control unit 112 may divide the M computing units into N physical resource subsets.

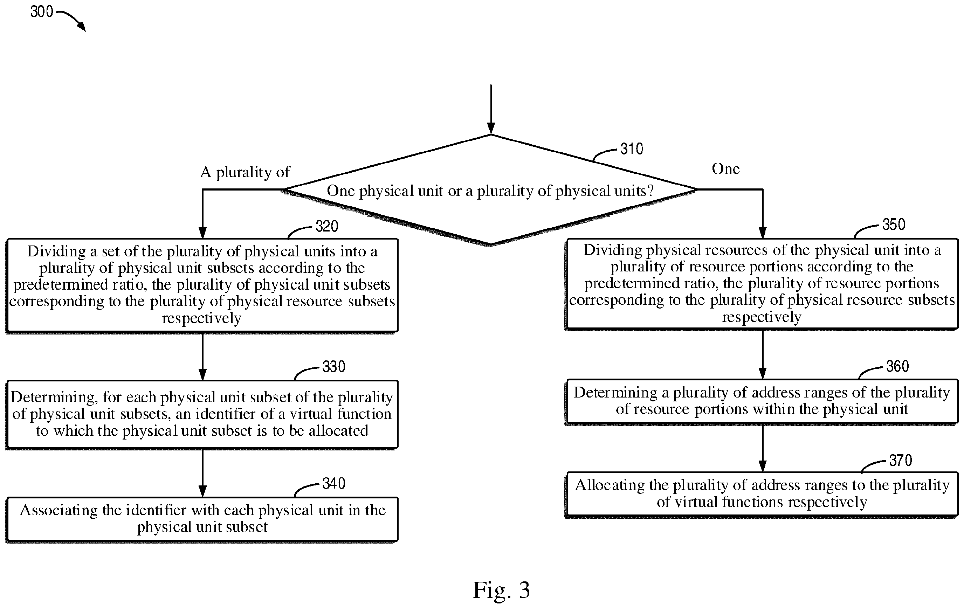

As a contrast, in other cases, the physical resource set of the SoC 104 is provided by one physical unit. For example, in the example of Fig. 1, the direct memory access resource set of the SoC 104 is provided by a direct memory access unit 110. In this case, the control unit 112 may divide the internal resources of the direct memory access unit 110 into N physical resource subsets. An example of dividing the physical resource set in different situations will be described below with reference to Fig. 3.

Fig. 3 shows a schematic flowchart of an example process 300 of division and allocation on a physical resource set according to an embodiment of the present disclosure. The process 300 may be considered as an embodiment of the method 200. Accordingly, in some embodiments, the process 300 may be performed at the SoC 104 communicatively coupled with the computing device 102. For example, the process 300 may be implemented by the control unit 112 of the SoC 104. In this case, the process 300 may be implemented by a processor or a processing unit of the control unit 112. In other embodiments, all or part of the process 300 may also be implemented by a computing device independent of the example environment 100, or by other units in the example environment 100.

As shown in Fig. 3, in 310, the control unit 112 may determine whether the physical resource set of the SoC 104 is provided by one physical unit or a plurality of physical units. If the physical resource set is provided by a plurality of physical units, in 320, the control unit 112 may divide a set composed of the plurality of physical units into a plurality of physical unit subsets according to a predetermined ratio, where the plurality of physical unit subsets obtained by division may correspond to the plurality of physical resource subsets respectively.

For example, it is assumed that in the example shown in Fig. 1, the value of N is 3, that is, 3 virtual machines 106-1, 106-2 and 106-3 run on the computing device 102, and the SoC 104 supports 3 Virtual functions 116-1, 116-2 and 116-3. It is also assumed that the value of M is 8, that is, the SoC 104 has 8 computing units 108-1 to 108-8. In addition, it is further assumed that the predetermined ratio used to divide the physical resource set is 1: 2: 1, that is, the physical resource set may be allocated to the 3 virtual functions 116-1, 116-2 and 116-3 and to the corresponding 3 virtual machines 106-1, 106-2 and 106-3 according to the ratio of 1: 2: 1.

In this case, the control unit 112 may divide the 8 computing units 108-1 to 108-8 into 3 physical resource subsets. The 3 physical resource subsets correspond to the 3 virtual functions 116-1, 116-2 and 116-3 respectively. Just as an example, the first physical resource subset may include 2 computing units, for example, computing units 108-1 and 108-2. The second physical resource subset may include 4 computing units, for example, computing units 108-3, 108-4, 108-5 and 108-6. The third physical resource subset may include 2 computing units, for example, computing units 108-7 and 108-8. By such division, an individual physical unit can be used as a whole for a certain virtual function, thereby improving the isolation between the virtual functions.

It should be understood that the specific number of computing units, the specific number of virtual functions, the number of computing units and specific computing units included in each physical resource subset, and the specific predetermined ratio are described for illustration and explanation purposes only, but are not intended to limit the scope of the present disclosure in any way. In other embodiments, the SoC 104 may include any number of computing units, any number of virtual functions, and any number of computing units and any specific computing unit included in each physical resource subset, and the physical resource set may be divided in any predetermined ratio.

On the other hand, if the control unit 112 determines that the physical resource set of the SoC 104 is provided by one physical unit in 310, the control unit 112 may divide physical resources of the physical unit into a plurality of resource portions according to a predetermined ratio in 350, where the plurality of resource portions may correspond to the plurality of physical resource subsets respectively. For example, the direct memory access resources of the SoC 104 are provided by a direct memory access unit 110, and can be used by all the virtual functions 116. In this case, the control unit 112 may divide the direct memory access resources inside the direct memory access unit 110 into a plurality of resource portions according to a predetermined ratio.

Specifically, it is assumed that the direct memory access unit 110 has 8 access channels (hereinafter referred to as CH1 to CH8), which can support 8 concurrent direct memory accesses, but the 8 channels may share 1 configuration interface (for example, an advanced peripheral bus (APB) interface). In addition, it is still assumed that the predetermined ratio for dividing the physical resource set is 1: 2: 1, and the control unit may divide the 8 channels inside the direct memory access unit 110 into 3 resource portions. The 3 resource portions correspond to the 3 virtual functions 116-1, 116-2 and 116-3 respectively. Just as an example, the first resource portion may include 2 channels, for example, CH1 and CH2. The second resource portion may include 4 channels, for example, CH3, CH4, CH5 and CH6. The third resource portion may include 2 channels, for example, CH7 and CH8. By such division, when the number of physical unit providing physical resources is indivisible, the division of physical resources between different virtual functions can still be achieved.

Embodiments in which the control unit 112 divides the physical resource subsets according to one or more physical units are described above. However, some embodiments of the present disclosure are not limited thereto. In other embodiments, the control unit 112 may also divide the physical resource subsets in other ways. For example, in the presence of a plurality of physical units, the control unit 112 may divide each physical unit into a plurality of resource portions according to a predetermined ratio. For another example, in the presence of a plurality of physical units, the control unit 112 may divide part of the physical units into physical unit subsets based on single physical units, and divide each physical unit of the other part of the physical units into a plurality of resource portions. More generally, the control unit 112 may divide the physical resource set into the physical resource subsets according to the predetermined ratio in any suitable way.

In addition, the predetermined ratio for dividing the physical resource set may be reasonably determined by the control unit 112 based on various relevant factors . For example, the control unit 112 may determine the predetermined ratio based on physical resource demands of the plurality of virtual machines 106 corresponding to the plurality of virtual functions 116. In this way, the control unit 112 may reasonably divide the physical resource set of the SoC 104 according to the actual demands of the virtual machines 106. Additionally or alternatively, the control unit 112 may determine the predetermined ratio based on the load levels of the virtual machines 106. Therefore, more physical resources in the physical resource set of the SoC 104 can be allocated to the virtual machines 106 having larger loads currently. Additionally or alternatively, the control unit 112 may determine the predetermined ratio based on the quality of service levels of the virtual machines 106. For example, the control unit 112 may allocate a larger ratio of physical resources to the virtual machines 106 having higher quality of service levels.

More generally, the control unit 112 may determine the predetermined ratio according to any other relevant factors that may affect resource allocation to reasonably divide the physical resource set of the SoC 104 into N physical resource subsets. By setting and adjusting the predetermined ratio, the SoC 104 may support different physical resource allocation ratios, that is, multiple modes, for example, physical resources may be divided in ratios of 1/4, 1/4 and 1/2 in mode 1, in ratios of 1/2 and 1/2 in mode 2, and in a ratio of 1/1 in mode 3 which means no division on the physical resource set. In this way, the SoC 104 can implement flexible physical resource allocation for the virtual functions 116.

Referring back to Fig. 2, in 230, the control unit 112 allocates the plurality of physical resource subsets obtained by division to the plurality of virtual functions respectively. For example, in the example shown in Fig. 1, the control unit 112 allocates the divided N physical resource subsets to the N virtual functions 116-1 to 116-N respectively, thereby achieving the isolation of physical resources between the different virtual functions while allocating the physical resources to the virtual functions. An example of allocating the physical resource subsets in different situations will be described below with reference to Fig. 3.

As shown in Fig. 3, when the physical resource set is provided by a plurality of physical units, the control unit 112 may determine, for each physical unit subset in the plurality of physical unit subsets, an identifier of the virtual function to which the physical unit subset is to be allocated in 330. For example, continuing to use the specific example of the 8 computing units assumed above, the control unit 112 may determine an identifier 116-1 of the virtual function 116-1 to be allocated for the first physical resource subset, that is, the computing units 108-1 and 108-2. Similarly, the control unit 112 may determine an identifier 116-2 of the virtual function 116-2 to be allocated for the second physical resource subset, that is, the computing units 108-3 to 108-6. Similarly, the control unit 112 may determine an identifier 116-3 of the virtual function 116-3 to be allocated for the third physical resource subset, that is, the computing units 108-7 and 108-8.

In 340, the control unit 112 may associate the identifier of the virtual function with each physical unit in the physical unit subset. For example, the control unit 112 may associate the computing units 108-1 and 108-2 with the identifier 116-1 of the virtual function 116-1, associate the computing units 108-3 to 108-6 with the identifier 116-2 of the virtual function 116-2, and associate the computing units 108-7 and 108-8 with the identifier 116-3 of the virtual function 116-3. In this way, the control unit 112 can directly and clearly identify to which virtual function a computing unit is allocated.

In some embodiments, the identifier of the virtual function associated with each physical unit may be stored inside the physical unit, for example, in a register inside the physical unit. As an example, the identifier 116-1 of the virtual function 116-1 corresponding to the computing unit 108-1 may be stored in an internal register of the computing unit 108-1. Table 1 below shows the corresponding relationship among the computing units 108, the virtual functions 116, and the virtual machines 106 in the above specific example.

**Table 1**

| Computing unit | Virtual function | Virtual machine |
|---|---|---|
| 108-1 | 116-1 | 106-1 |
| 108-2 | 116-1 | |
| 108-3 | 116-2 | 106-2 |
| 108-4 | 116-2 | |
| 108-5 | 116-2 | |
| 108-6 | 116-2 | |
| 108-7 | 116-3 | 106-3 |
| 108-8 | 116-3 | |

Based on the association relationship shown in Table 1 above, the control unit 112 may use each computing unit to support its corresponding virtual function. As an example, for each of the plurality of computing units 108, for example, for the computing unit 108-1, the control unit 112 may determine that the identifier associated with the computing unit 108-1 is 116-1. The virtual function identified by the identifier is the virtual function 116-1. The control unit 112 may then use the computing unit 108-1 to support the virtual function 116-1.

Similarly, the control unit 112 may also use the computing unit 108-2 to support the virtual function 116-1, use the computing units 108-3 to 108-6 to support the virtual function 116-2, and use the computing units 108-7 and 108-8 to support the virtual function 116-3. In this way, the control unit 112 can simply and clearly determine to which virtual function a computing unit is allocated, and use the computing unit to support the virtual function.

With continued reference to Fig. 3, when the physical resource set is provided by one physical unit, the control unit 112 may determine a plurality of address ranges of the plurality of resource portions in the physical unit within the physical unit in 360. For example, continuing to use the above example of assuming that the direct memory access unit 110 includes 8 access channels, the control unit 112 may determine a first address range of the first resource portion (i.e., channels CH1 and CH2) of the direct memory access unit 110, determine a second address range of the second resource portion (i.e., channels CH3 to CH6) of the direct memory access unit 110, and a third address range of the third resource portion (i.e., channels CH7 and CH8) of the direct memory access unit 110.

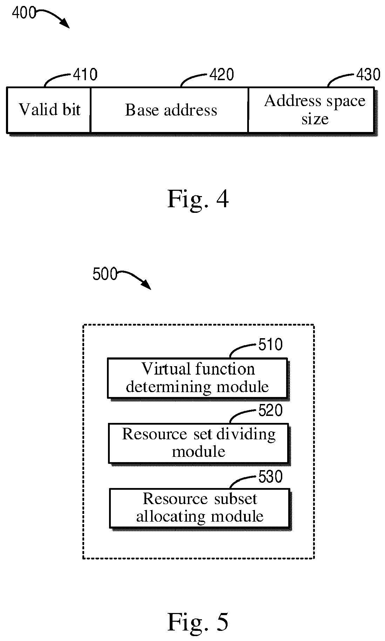

In 370, the control unit 112 may allocate the plurality of determined address ranges to the plurality of virtual functions respectively. For example, the control unit 112 may allocate the first address range to the virtual function 116-1, the second address range to the virtual function 116-2, and the third address range to the virtual function 116-3. In this way, the control unit 112 can allocate different resource portions represented by different address ranges to a plurality of virtual functions, thereby implementing hardware isolation between different virtual functions based on different accessible resource portions within a single physical unit. An example of accessing different resource portions in a single physical unit through address ranges will be described below with reference to Fig. 4.

Fig. 4 shows a schematic block diagram of a register 400 for managing an address range according to an embodiment of the present disclosure. As shown in Fig. 4, the SoC 104 may set a corresponding register 400 for each of the virtual functions 116. The register 400 may be directed to a segment of accessible address range, which may include a valid bit 410, a base address field 420, and an address space size field 430.

The valid bit 410 may indicate whether the address needs to be checked, that is, whether the address range for the register 400 can be accessed by the virtual function. For example, if the address range recorded in the register 400 is set to 0 for the valid bit 410 of the virtual function 116-1, it indicates that the virtual function 116-1 can access the address range. In contrast, if the address range recorded in the register 400 is set to 1 for the valid bit 410 of the virtual function 116-1, it indicates that the virtual function 116-1 cannot access the address range. It will be understood that the specific value of the valid bit 410 herein is merely an example, and is not intended to limit the scope of the present disclosure in any way. In other embodiments, the valid bit 410 may also represent a specific meaning by a specific different value, and may even be represented by a pluarlity of bits.

The base address field 420 indicates a base address of the address range for the register 400, and the address space size field 430 indicates an address space size of the address range for the register 400. Therefore, in some embodiments, the valid accessible address range of the specific virtual function can be expressed (assuming the valid bit width is 26 bits) : {base, 8 bits 0} <= address [25: 0] < {base, 8 bits 0}+ size. Further, in some embodiments, the register 400 may be set to have a bit length of 32 bits, for example, expressed as 0 to 32 bits. In this case, the address space size field 430 may include bits 0 to 12, the base address field 420 may include bits 13 to 30, and the valid bit 410 may include bit 31. However, in other embodiments, the register 400 may have any number of bits, and each field therein may also have any suitable number of bits. Moreover, in some embodiments, the minimum allocation granularity of the address range in the direct memory access unit 110 may be set to 256 bytes. However, it should be understood that other granularities are feasible in some embodiments of the present disclosure.

In some embodiments, the register 400 may be provided in a virtual access control unit (VAC). The virtual access control unit is, for example, an access control module provided on the SoC 104, and mainly functions to control the access to a physical function and a virtual function. For system security, the virtualization process requires hardware isolation for different virtual machines. In this way, the channels accessible by the physical function and the virtual function may be different. Generally speaking, the physical function can access all channels on the SoC 104, while the virtual function can access only some of the channels. For example, the physical function can access the register 400 shown in Fig. 4, while the virtual function cannot access the register 400.

Therefore, when accessing a single physical unit providing a physical resource set, the control unit 112 may determine, based on an access request of a virtual function among the plurality of virtual functions to the physical unit, an address in the physical unit to be accessed by the virtual function. If the determined address is within the address range allocated to the virtual function, the control unit 112 may allow the virtual function to access the address, otherwise, the control unit 112 does not allow the virtual function to access the address. In this way, the control unit 112 can prevent a virtual function from accessing a resource portion that is not allocated to the virtual function, thereby ensuring hardware isolation between different resource portions accessible by different virtual functions within a single physical unit.

As an example, it is assumed that the base address of the internal resources of the direct memory access unit 110 in Fig. 1 is 0xDADA_0000, each channel requires a register space of 0x200, and the resources are allocated to the 3 virtual functions 116-1, 116-2 and 116-3 (and the corresponding virtual machines 106-1, 106-2 and 106-3) according to the ratio of 1: 2: 1, the corresponding configuration of the register 400 may be expressed as Table 2 below, where the symbol "0x" indicates that the following number is a hexadecimal number.

**Table 2**

| Channel | Virtual function | Virtual machine | Base address | Address space size | Register value | Valid address range |
|---|---|---|---|---|---|---|
| CH1 | 116-1 | 106-1 | 0x2DA_00 | 0x400 | 0xDB40_0400 | 0xDADA_0000∼0xDADA_03FF |
| CH2 | 116-1 | | | | | |
| CH3 | 116-2 | 106-2 | 0x2DA_04 | 0x800 | 0xDB40_8800 | 0xDADA_0400∼0xDADA_0BFF |
| CH4 | 116-2 | | | | | |
| CH5 | 116-2 | | | | | |
| CH6 | 116-2 | | | | | |
| CH7 | 116-3 | 106-3 | 0x2DA_0C | 0x400 | 0xDB41_8400 | 0xDADA_0C00∼0xDADA_0FFF |
| CH8 | 116-3 | | | | | |

In this case, it is assumed that the virtual function 116-1 (corresponding to the virtual machine 106-1) requests access to the address 0xDADA_0200. Since the address is within the address range (0xDADA_0000 ~ 0xDADA_03FF) defined by 0xDB40_0400, the access is valid. In this case, the control unit 112 may allow the virtual function 116-1 to normally access the address. For another example, it is assumed that the virtual function 116-1 requests access to the address 0xDADA_0500. Because the address is not within the address range (0xDADA_0000 ~ 0xDADA_03FF) defined by 0xDB40_0400, the access is invalid. In this case, the control unit 112 may return access error information (for example, through the virtual access control unit), thereby preventing the virtual function 116-1 from accessing the address.

In this way, the control unit 112 can effectively prevent the virtual function (or the virtual machine) from accessing resources allocated to other virtual functions (virtual machines), thereby achieving hardware isolation between the virtual machines. In some embodiments, the SoC 104 may also be provided with a separate register configuration channel for controlling the access of the virtual functions 116-1 to 116-N to the direct memory access unit 110.

Fig. 5 shows a schematic block diagram of an apparatus 500 for resource management according to an embodiment of the present disclosure. In some embodiments, the apparatus 500 may be included in the computing device 102 of Fig. 1 or implemented as the computing device 102.

As shown in Fig. 5, the apparatus 500 includes a virtual function determining module 510, a resource set dividing module 520, and a resource subset allocating module 530. The virtual function determining module 510 is configured to determine a plurality of virtual functions to be supported, where each of the plurality of virtual functions corresponds to a virtual machine running on a computing device. The resource set dividing module 520 is configured to divide a physical resource set into a plurality of physical resource subsets according to a predetermined ratio, where the number of the physical resource subsets is identical to the number of the virtual functions. The resource subset allocating module 530 is configured to allocate the plurality of physical resource subsets to the plurality of virtual functions respectively.

In some embodiments, the resource set dividing module 520 may include: a physical unit dividing module, configured to divide, in response to the physical resource set being provided by a plurality of physical units, a set of the plurality of physical units into a plurality of physical unit subsets according to the predetermined ratio, the plurality of physical unit subsets corresponding to the plurality of physical resource subsets respectively.

In some embodiments, for each physical unit subset of the plurality of physical unit subsets, the resource subset allocating module 530 may include: an identifier determining module, configured to determine an identifier of a virtual function to which the physical unit subset is to be allocated; and an association module, configured to associate the identifier with each physical unit in the physical unit subset.

In some embodiments, for each physical unit of the plurality of physical units, the apparatus 500 may further include: an association function determining module, configured to determine a virtual function identified by the identifier associated with the physical unit; and a virtual function supporting module, configured to support the virtual function using the physical unit.

In some embodiments, the resource set dividing module 520 may include: a physical resource dividing module, configured to divide, in response to the physical resource set being provided by one physical unit, physical resources of the physical unit into a plurality of resource portions according to the predetermined ratio, the plurality of resource portions corresponding to the plurality of physical resource subsets respectively.

In some embodiments, the resource subset allocating module 530 may include: an address range determining module, configured to determine a plurality of address ranges of the plurality of resource portions within the physical unit; and an address range allocating module, configured to allocate the plurality of address ranges to the plurality of virtual functions respectively.

In some embodiments, the apparatus 500 may further include: an access address determining module, configured to determine, based on an access request of a virtual function among the plurality of virtual functions to the physical unit, an address in the physical unit to be accessed by the virtual function; and an access allowing module, configured to allow, in response to the address being within the address range allocated to the virtual function, the virtual function to access the address.

In some embodiments, the apparatus 500 may further include: a predetermined ratio determining module, configured to determine the predetermined ratio based on at least one of: physical resource demands, load levels, or quality of service levels of the plurality of virtual machines corresponding to the plurality of virtual functions.

In some embodiments, the apparatus 500 may be on a system on chip communicatively coupled with the computing device.

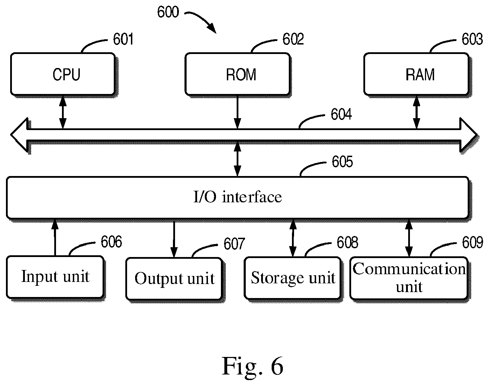

Fig. 6 shows a schematic block diagram of a device 600 that can be used to implement some embodiments of the present disclosure. As shown in Fig. 6, the device 600 includes a central processing unit (CPU) 601, which may execute various appropriate operations and processing based on computer program instructions stored in a read-only memory (ROM) 602 or computer program instructions loaded from a storage unit 608 to a random access memory (RAM) 603. The RAM 603 may also store various programs and data required by the operations of the device 600. The CPU 601, the ROM 602, and the RAM 603 are connected to each other through a bus 604. An input/output (I/O) interface 605 is also connected to the bus 604.

A plurality of components in the device 600 are connected to the I/O interface 605, including: an input unit 606, for example, a keyboard, a mouse, or the like; an output unit 607, for example, various types of displays, speakers, or the like; a storage unit 608, for example, a magnetic disk, an optical disk, or the like; and a communication unit 609, for example, a network card, a modem, a wireless communication transceiver, or the like. The communication unit 609 allows the device 600 to exchange information/data with other devices over a computer network such as the Internet and/or various telecommunication networks.

The various processes and processing described above, such as the example methods 200 and 300, may be performed by the processing unit 601. For example, in some embodiments, the example methods 200 and 300 may be implemented as a computer software program that is tangibly contained in a machine readable medium, such as the storage unit 608. In some embodiments, some or all of the computer program may be loaded and/or installed to the device 600 via the ROM 602 and/or the communication unit 609. When the computer program is loaded to the RAM 603 and executed by the CPU 601, one or more steps of the example methods 200 and 300 described above may be executed.

As used herein, the term "include" and the like should be interpreted as open inclusion, i.e., "include but not limited to". The term "based on" should be interpreted as "at least partially based on". The term "one embodiment" or "the embodiment" should be interpreted as "at least one embodiment". The terms "first", "second" and the like may indicate different or identical objects. Other explicit and implicit definitions may also be included below.

As used herein, the term "determining" encompasses various operations. For example, "determining" may include computing, calculating, processing, deriving, investigating, looking up (e.g., looking up in a table, a database, or another data structure), ascertaining, and the like. In addition, "determining" may include receiving (e.g., receiving information), accessing (e.g., accessing data in a memory), and the like. In addition, "determining" may include parsing, selecting, selecting, establishing, and the like.

It should be noted that some embodiments of the present disclosure may be implemented by hardware, software, or a combination of software and hardware. The hardware portion may be implemented with dedicated logics; and the software portion may be stored in a memory and executed by an appropriate instruction execution system, such as a microprocessor or dedicated design hardware. Those skilled in the art may understand that the above devices and methods may be implemented using computer-executable instructions and/or included in processor control codes, for example, such codes are provided on a programmable memory or a data carrier such as an optical or electronic signal carrier.

Furthermore, although the operations of the methods of the present disclosure are described in specific orders in the drawings, this does not require or imply that the operations must be performed in the specific orders, or that all the operations shown must be performed to achieve the desired results. Instead, the steps shown in the flowcharts can change the orders of execution. Additionally or alternatively, some steps may be omitted, a plurality of steps may be combined into one step for execution, and/or one step may be split into a plurality of steps for execution. It should also be noted that the features and functions of two or more apparatuses according to some embodiments of the present disclosure may be embodied in one apparatus. Conversely, the features and functions of one apparatus described above may be further divided and embodied by a plurality of apparatuses.

Although the present disclosure has been described with reference to several specific embodiments, it should be understood that the present disclosure is not limited to the specific embodiments disclosed. The present disclosure is intended to cover various modification and equivalent arrangements included within the spirit and scope of the appended claims.

## Claims

1. A method for resource management, comprising:
determining (210) a plurality of virtual functions to be supported, each of the plurality of virtual functions corresponding to a virtual machine running on a computing device;
dividing (220) a physical resource set into a plurality of physical resource subsets according to a predetermined ratio, a number of the physical resource subsets being identical to a number of the virtual functions; and
allocating (230) the plurality of physical resource subsets to the plurality of virtual functions respectively.

2. The method according to claim 1, wherein the dividing (220) a physical resource set into a plurality of physical resource subsets comprises:
dividing, in response to the physical resource set being provided by a plurality of physical units, a set of the plurality of physical units into a plurality of physical unit subsets according to the predetermined ratio, the plurality of physical unit subsets corresponding to the plurality of physical resource subsets respectively.

3. The method according to claim 2, wherein the allocating (230) the plurality of physical resource subsets to the plurality of virtual functions comprises:
for each physical unit subset of the plurality of physical unit subsets,
determining an identifier of a virtual function to which the physical unit subset is to be allocated; and
associating the identifier with each physical unit in the physical unit subset.

4. The method according to claim 3, further comprising:
for each physical unit of the plurality of physical units,
determining a virtual function identified by the identifier associated with the physical unit; and
supporting the virtual function using the physical unit.

5. The method according to any one of claims 1-4, wherein the dividing (220) a physical resource set into a plurality of physical resource subsets comprises:
dividing, in response to the physical resource set being provided by one physical unit, physical resources of the physical unit into a plurality of resource portions according to the predetermined ratio, the plurality of resource portions corresponding to the plurality of physical resource subsets respectively.

6. The method according to claim 5, wherein the allocating (230) the plurality of physical resource subsets to the plurality of virtual functions comprises:
determining a plurality of address ranges of the plurality of resource portions within the physical unit; and
allocating the plurality of address ranges to the plurality of virtual functions respectively.

7. The method according to claim 6, further comprising:
determining, based on an access request of a virtual function among the plurality of virtual functions to the physical unit, an address in the physical unit to be accessed by the virtual function; and
allowing, in response to the address being within the address range allocated to the virtual function, the virtual function to access the address.

8. The method according to any one of claims 1-7, further comprising:
determining the predetermined ratio based on at least one of: physical resource demands, load levels, or quality of service levels of the plurality of virtual machines corresponding to the plurality of virtual functions.

9. The method according to any one of claims 1-8, wherein the method is executed on a system on chip, SoC, communicatively coupled with the computing device.

10. An apparatus for resource management, comprising a plurality of modules (510, 520, 530) configured to implement the method according to any one of claims 1-9.

11. An electronic device, comprising:
one or more processors (601); and
a storage apparatus (602, 603) for storing one or more programs, wherein the one or more programs, when executed by the one or more processors (601), cause the one or more processors (601) to implement the method according to any one of claims 1-9.

12. A computer-readable storage medium, storing a computer program thereon, wherein the computer program, when executed by a processor (601), implements the method according to any one of claims 1-9.
